# EUROPEAN PATENT APPLICATION

(11) **EP 4 822 337 A1**
(43) Date of publication of application: **14.10.2026**
(21) Application number: 24900533.1
(22) Date of filing: 28.11.2024
(51) Int. Cl.: G01N 21/64

(54) **LAMINATED SUBSTRATE**

(30) Priority: 07.12.2023 JP 2023207217; 21.11.2024 JP 2024203151
(71) Applicant: SUMITOMO CHEMICAL COMPANY, LIMITED, Tokyo 103-6020 (JP)
(72) Inventor: FUKUURA, Tomohiro, Osaka-shi, Osaka 554-8558 (JP)
(74) Representative: Vossius & Partner Patentanwälte Rechtsanwälte mbB
(86) International application number: PCT/JP2024/042121
(87) International publication number: WO 2025/121239

(57) **Abstract**

Provided is a layered substrate having excellent fluorescence enhancement characteristics. The layered substrate includes: a plate-shaped substrate having a pair of main surfaces opposite to each other; a plurality of metal-based particles disposed on one main surface of the substrate so as to be separated from each other in a direction parallel to the one main surface; and a protective layer covering a surface of each of the metal-based particles, wherein the plurality of metal-based particles satisfy at least one of the following (1) and (2), and a surface shape of the protective layer conforms to surface shapes of the metal-based particles. (1) An average particle diameter of the plurality of metal-based particles is 200 to 1600 nm, an average height of the plurality of metal-based particles is 55 to 500 nm, and an aspect ratio defined by a ratio of the average particle diameter to the average height is 1 to 8. (2) Each of the plurality of metal-based particles is disposed on the one main surface of the substrate such that an average distance between the plurality of metal-based particles and adjacent metal-based particles is 1 to 1000 nm, and a standard deviation of the average distance is 30 nm or less.

## Description

### TECHNICAL FIELD

The present invention relates to a layered substrate.

### BACKGROUND ART

A technique of enhancing fluorescence using localized plasmon resonance of metal nanoparticles is known (e.g., Patent Document 1). Patent Document 1 states that a layered body including an island layer (2) containing a plurality of metal particles and a spacer film (5) covering the layer is used for an optochemical fluorescence sensor.

### PRIOR ART DOCUMENT

### PATENT DOCUMENT

Patent Document 1: JP-A-08-271431

### SUMMARY OF THE INVENTION

### PROBLEMS TO BE SOLVED BY THE INVENTION

However, the layered body as described above still has room for improvement in the degree of enhancement of fluorescence. An object of the present invention is to provide a layered substrate having excellent fluorescence enhancement characteristics.

### MEANS FOR SOLVING THE PROBLEMS

[1] A layered substrate, comprising:
   a plate-shaped substrate having a pair of main surfaces opposite to each other;
   a plurality of metal-based particles disposed on one main surface of the substrate so as to be separated from each other in a direction parallel to the one main surface; and
   a protective layer covering a surface of each of the metal-based particles, wherein
   the plurality of metal-based particles satisfy at least one of the following (1) and (2), and
   a surface shape of the protective layer follows surface shapes of the metal-based particles.
      (1) An average particle diameter of the plurality of metal-based particles is 200 to 1600 nm, an average height of the plurality of metal-based particles is 55 to 500 nm, and an aspect ratio defined by a ratio of the average particle diameter to the average height is 1 to 8.
      (2) Each of the plurality of metal-based particles is disposed on the one main surface of the substrate such that an average distance between the plurality of metal-based particles and adjacent metal-based particles is 1 to 1000 nm, and a standard deviation of the average distance is 30 nm or less.
[2] The metal-based particle assembly layered substrate according to [1], in which a coefficient of variation (CV value) of a thickness of the protective layer is 30% or less.
[3] The metal-based particle assembly layered substrate according to [1] or [2], in which an average value of thickness of the protective layer is 300 nm or less.
[4] The metal-based particle assembly layered substrate according to [3], in which an average value of thickness of the protective layer is less than 50 nm.
[5] The metal-based particle assembly layered substrate according to any one of [1] to [4], in which the protective layer is amorphous.

### EFFECT OF THE INVENTION

Provided is a layered substrate having excellent fluorescence enhancement characteristics.

### BRIEF DESCRIPTION OF THE DRAWINGS

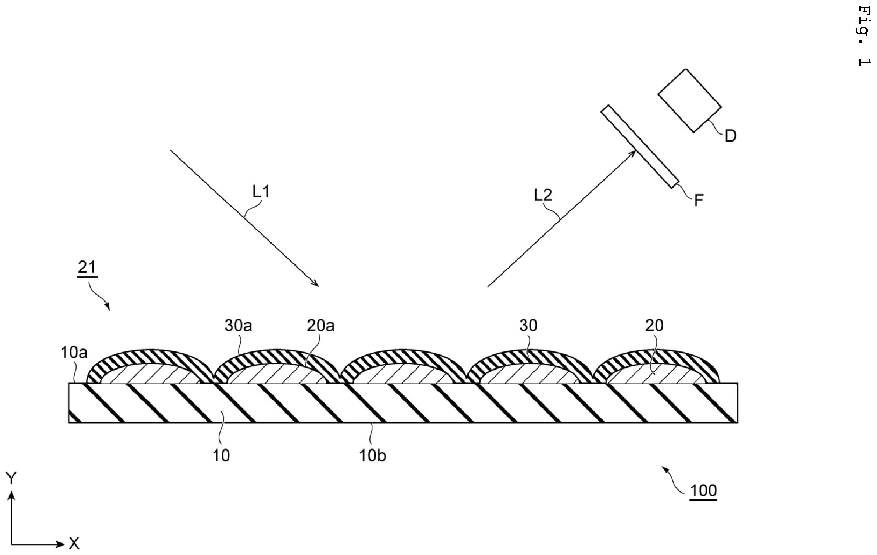

Fig. 1 is a sectional view schematically illustrating an example of a layered substrate according to the present invention.

### MODE FOR CARRYING OUT THE INVENTION

### <Layered substrate>

### (1) Layer configuration

The layered substrate according to the present disclosure includes:
a plate-shaped substrate having a pair of opposing main surfaces;
a plurality of metal-based particles disposed on one surface of the substrate so as to be separated from each other in a direction parallel to the one main surface; and
a protective layer covering a surface of each of the metal-based particles. The layered substrate according to an embodiment will be described with reference to Fig. 1.

Fig. 1 is a sectional view schematically illustrating an example of the layered substrate. A layered substrate 100 illustrated in Fig. 1 includes: a substrate 10 having a pair of opposing main surfaces 10a and 10b; a plurality of metal-based particles 20 disposed on the main surface 10a of the substrate 10 so as to be separated from each other in a direction parallel to the main surface 10a; and a protective layer 30 covering the surface of each of the metal-based particles 20.

### (2) Substrate

The substrate 10 has a plate shape. The plate shape means that the plate shape has a pair of main surfaces 10a and 10b facing each other and a side surface connecting the main surfaces, and a thickness as a distance between the main surfaces is 1/5 or less of a maximum diameter (for example, in the case of a rectangle, the diagonal length) of the main surfaces. The thickness may be 1/10 or less, 1/20 or less, or 1/30 of the maximum diameter of the main surface. The area of the main surface is larger than the area of the other surfaces constituting the side surface.

The lower limit of the area of the main surface is not particularly limited, and may be, for example, 0.25 µm² or more. The layered substrate may be a long roll, and thus the upper limit of the area of the main surface is not particularly limited, but may be, for example, 1 m² or less.

The thickness of the substrate 10 is not particularly limited, and is, for example, 10 µm to 10 mm, preferably 20 µm to 5 mm, more preferably 30 µm to 1 mm.

The substrate 10 is preferably non-conductive. This is because when the substrate 10 is conductive, electrons can be exchanged between metal-based particles formed on the substrate via the substrate, which thus tends to reduce the plasmon resonance effect. Examples of the non-conductive material constituting the substrate 10 include inorganic insulating materials such as mica, SiO₂, ZrO₂, and glass, and thermoplastic resins.

The substrate 10 may be a substrate having light-transmitting properties or being optically transparent, or may have non-light-transmitting properties (light absorbing properties).

The substrate 10 may have a single layer structure or a multilayer structure.

### (2) Metal-based particles

The plurality of metal-based particles 20 are disposed on the main surface 10a of the substrate 10 so as to be separated from each other in a direction parallel to the main surface 10a. It is preferable that the plurality of metal-based particles 20 are not disposed to be separated from each other in a direction perpendicular to the main surface 10a. In other words, it is preferable that the metal-based particles 20 are two-dimensionally disposed along the main surface 10a.

As illustrated in Fig. 1, the metal-based particle 20 is preferably in contact with the main surface 10a of the substrate 10. The metal-based particle 20 is preferably not provided on the other main surface 10b of the substrate 10.

The plurality of metal-based particles 20 constitute a metal-based particle assembly layer 21. The plurality of metal-based particles 20 can constitute a plasmonic structure. The "plasmonic structure" refers to a structure that can exhibit plasmon resonance. Plasmon is a compressional wave of free electrons generated by collective oscillation of the free electrons in a structure. When the layered substrate is applied to a sensor element, for example, the plurality of metal-based particles 20 having a plasmonic structure can enhance the intensity of light emission (fluorescence or the like) from a light-emitting substance that labels an analyte. Therefore, the layered substrate can be suitably used as an emission enhancing element for various sensor elements. Application of the layered substrate to a sensor element can improve sensitivity, quantitative accuracy, and/or reproducibility (stability) of quantitative results of the sensor element.

For ensuring that the metal-based particle assembly layer 21 has a plasmonic structure, the metal-based particles 20 preferably include a material capable of plasmon resonance in the ultraviolet to visible light region. The material capable of plasmon resonance in the ultraviolet to visible light region means a material that exhibits a plasmon peak appearing in the ultraviolet to visible light region in absorption spectrum measurement by absorptiometry in the form of nanoparticles or assembly thereof.

Examples of the metal-based material capable of plasmon resonance in the ultraviolet to visible light region include noble metals such as gold, silver, copper, platinum, and palladium; metals other than noble metals, such as aluminum and tantalum; alloys containing a metal selected from the noble metals and the metals other than the noble metals; and metal compounds (such as metal oxides, and metal salts) containing a metal selected from the noble metals and the metals other than the noble metals. Among these materials, as the metal-based material capable of plasmon resonance in the ultraviolet to visible light region, a noble metal such as gold, silver, copper, platinum, or palladium is preferable, and silver is more preferable from the viewpoint of being inexpensive and having small absorption (a small imaginary part of a dielectric function at a visible light wavelength).

The plurality of metal-based particles 20 satisfy at least one of the following (1) and (2), and preferably satisfy both of them.
(1) An average particle diameter D of the plurality of metal-based particles is 200 to 1600 nm, an average height H of the plurality of metal-based particles is 55 to 500 nm, and an aspect ratio AR defined by a ratio of the average particle diameter to the average height is 1 to 8.
(2) Each of the plurality of metal-based particles is disposed on the one main surface of the substrate such that an average distance L between the plurality of metal-based particles and adjacent metal-based particles is 1 to 1000 nm, and a standard deviation LCV of the average distance is 30 nm or less.

The average particle diameter D of the plurality of metal-based particles 20 constituting the metal-based particle assembly layer 21 is preferably in the range of 200 to 1200 nm, more preferably 250 to 500 nm, and still more preferably 300 to 500 nm. The average particle diameter of the metal-based particles 20 is preferably selected as appropriate in accordance with the type of the metal-based material constituting the metal-based particles 20.

The average particle diameter D of the plurality of metal-based particles 20 is an average value of the particle diameters of ten selected metal-based particles, which is defined as follows. These ten metal-based particles are randomly selected from an SEM observation image captured from directly above the metal-based particle assembly layer 21 including the plurality of metal-based particles 20. In each metal-based particle image, five tangential diameters are randomly drawn (provided, however, that all straight line segments each serving as a tangential diameter are allowed to pass only through the inside of the metal-based particle image, and one of the straight line segments is a longest straight line segment that passes only through the inside of the metal-based particle image). The average value of these tangent diameters (hereinafter, this average value is also referred to as "average tangential diameter") is deemed as the particle diameter of each metal-based particle. The tangential diameter is defined as a perpendicular line segment with respect to two parallel lines, where the two parallel lines are in contact with and sandwich the outline (projection image) of the metal-based particle, and the length of the perpendicular line segment is a distance of the two parallel lines (the Nikkan Kogyo Shimbun, Ltd., "Particle Diameter Measurement Technique", 1994, page 5).

The method of measuring the average particle diameter will be more specifically described. First, the SEM observation image is obtained using a scanning electron microscope "JSM-5500" manufactured by JEOL Ltd., or an apparatus equivalent thereto. Then, the obtained observation image is read as 1280 pixels in width × 960 pixels in length by using free image processing software "ImageJ" manufactured by the National Institutes of Health. Subsequently, ten random numbers (x₁, x₂, x₃, x₄, x₅, x₆, x₇, x₈, x₉, x₁₀) are obtained from 1 to 1280, and ten random numbers (y₁, y₂, y₃, y₄, y₅, y₆, y₇, y₈, y₉, y₁₀) are obtained from 1 to 960 by using a random number generating function "RANDBETWEEN" of spreadsheet software "Excel" manufactured by Microsoft Corporation. Ten sets of random number combinations (x₁, y₁), (x₂, y₂), (x₃, y₃), (x₄, y₄), (x₅, y₅), (x₆, y₆), (x₇, y₇), (x₈, y₈), (x₉, y₉), and (x₁₀, y₁₀) are obtained from each of the ten random numbers obtained. Using the numerical value of the random number generated from 1 to 1280 as the x coordinate and the numerical value of the random number generated from 1 to 960 as the y coordinate, ten sets of coordinate points (x₁, y₁), (x₂, y₂), (x₃, y₃), (x₄, y₄), (x₅, y₅), (x₆, y₆), (x₇, y₇), (x₈, y₈), (x₉, y₉), and (x₁₀, y₁₀) are obtained. Then, the above-described average tangential diameter is obtained for each of a total of ten metal-based particle images including these coordinate points. Subsequently, the average particle diameter is obtained as an average value of the average tangential diameters of the ten metal-based particle images. When at least one of the ten coordinate points as ten sets of random number combinations is not included in the metal-based particle image, or when two or more coordinate points are included in the same metal-based particle image, this random number combination is discarded, and random number generation is repeated until all the ten coordinate points are respectively included in different metal-based particle images.

The average height H of the plurality of metal-based particles 20 is preferably in the range of 55 to 300 nm, more preferably 70 to 150 nm. The average height H of the metal-based particles 20 is an average value of ten measured values of heights of ten metal-based particles, where the ten metal-based particles are randomly selected and the heights of the ten metal-based particles are measured in an AFM observation image of the metal-based particle assembly layer 21.

The aspect ratio AR of the plurality of metal-based particles 20 is preferably in the range of 2 to 8, more preferably 2.5 to 8. The aspect ratio AR of the metal-based particles 20 is defined by the ratio of the average particle diameter D to the average height H (average particle diameter D/average height H). The metal-based particle 20 may have a perfect spherical shape, but preferably has a flat shape having an aspect ratio AR of more than 1.

In the metal-based particle assembly layer 21, each of the plurality of metal-based particles 20 has an average distance L (hereinafter, also referred to as an "average inter-particle distance") from the adjacent metal-based particles of 1 to 1000 nm, but is preferably disposed so as to be within a range of 1 to 150 nm. In the present specification, the term "the metal-based particles are adjacent to each other" means that the metal-based particles are adjacent to each other in a direction parallel to the main surface 10a. The plurality of metal-based particles 20 are disposed based on such an average inter-particle distance, thereby making it easier to obtain strong plasmon resonance and further enhancing the effect of extending the range of effect of plasmon resonance. The average inter-particle distance is more preferably 1 to 100 nm, more preferably 1 to 50 nm, and still more preferably 1 to 20 nm. When the average inter-particle distance is less than 1 nm, electron transfer between particles occurs based on a Dexter mechanism, which is disadvantageous in terms of deactivation of localized plasmon.

The average inter-particle distance is an average value of interparticle distances of ten metal-based particles, where the ten metal-based particles are randomly selected from an SEM observation image captured from directly above the metal-based particle assembly layer 21 including the plurality of metal-based particles 20, and an interparticle distance between each selected metal-based particle and the adjacent metal-based particle thereof is determined. The interparticle distance between a metal-based particle and the adjacent metal-based particle thereof is a value obtained by measuring the distances between each selected metal-based particle and all the adjacent metal-based particles thereof (the minimum distance between the surfaces of the adjacent metal-based particles) and averaging these distances.

The method of measuring the average inter-particle distance will be more specifically described. First, the SEM observation image is obtained by using the scanning electron microscope "JSM-5500" manufactured by JEOL Ltd., or an apparatus equivalent thereto. Then, the obtained observation image is read as 1280 pixels in width × 960 pixels in length by using free image processing software "ImageJ" manufactured by the National Institutes of Health. Next, ten random numbers (x₁ to x₁₀) are obtained from 1 to 1280, and ten random numbers (y₁ to y₁₀) are obtained from 1 to 960 by using a random number generating function "RANDBETWEEN" of spreadsheet software "Excel" manufactured by Microsoft Corporation. Ten sets of random number combinations (x₁, y₁) to (x₁₀, y₁₀) are obtained from each of the ten random numbers obtained. Using the numerical value of the random number generated from 1 to 1280 as the x coordinate and the numerical value of the random number generated from 1 to 960 as the y coordinate, ten sets of coordinate points (x₁, y₁) to (x₁₀, y₁₀) are obtained. Then, an interparticle distance between the metal-based particle and the adjacent metal-based particle is obtained for each of a total of ten metal-based particle images each including the coordinate point. Subsequently, an average inter-particle distance is obtained as an average value of such ten inter-particle distances. When at least one of the ten coordinate points as ten sets of random number combinations is not included in the metal-based particle image, or when two or more coordinate points are included in the same metal-based particle image, this random number combination is discarded, and random number generation is repeated until all the ten coordinate points are respectively included in different metal-based particle images.

The standard deviation of the average inter-particle distance is preferably 0.1 nm or more, more preferably 0.2 nm or more, and still more preferably 0.3 nm or more.

The standard deviation of the average inter-particle distance is defined as follows. First, one metal-based particle is randomly selected from an SEM observation image captured from directly above the metal-based particle assembly layer 21 including the plurality of metal-based particles 20, and an interparticle distance between the selected metal-based particle and the adjacent metal-based particle thereof is determined. The interparticle distance between a metal-based particle and the adjacent metal-based particle thereof is a value obtained by measuring the distances between the selected metal-based particle and all the adjacent metal-based particles thereof (i.e., the minimum distance between the surfaces thereof) and averaging these distances. Then, in the above SEM observation image, nine metal-based particles different from the above one metal-based particle are randomly selected, and the interparticle distance between each of these nine metal-based particles and the respective adjacent metal-based particle is determined in the same manner as described above. The standard deviation of the interparticle distances between the total of ten metal-based particles thus obtained and the respective adjacent metal-based particles is defined as the standard deviation of the average inter-particle distance.

The method of measuring the standard deviation of the average inter-particle distance will be more specifically described. First, the SEM observation image is obtained by using the scanning electron microscope "JSM-5500" manufactured by JEOL Ltd., or an apparatus equivalent thereto. Then, the obtained observation image is read as 1280 pixels in width × 960 pixels in length by using free image processing software "ImageJ" manufactured by the National Institutes of Health. Next, ten random numbers (x₁ to x₁₀) are obtained from 1 to 1280, and ten random numbers (y₁ to y₁₀) are obtained from 1 to 960 by using a random number generating function "RANDBETWEEN" of spreadsheet software "Excel" manufactured by Microsoft Corporation. Ten sets of random number combinations (x₁, y₁) to (x₁₀, y₁₀) are obtained from each of the ten random numbers obtained. Using the numerical value of the random number generated from 1 to 1280 as the x coordinate and the numerical value of the random number generated from 1 to 960 as the y coordinate, ten sets of coordinate points (x₁, y₁) to (x₁₀, y₁₀) are obtained. Then, an interparticle distance between the metal-based particle and the adjacent metal-based particle is obtained for each of a total of ten metal-based particle images each including the coordinate point. Subsequently, the standard deviation of the average inter-particle distance is obtained as the standard deviation of such ten interparticle distances. When at least one of the ten coordinate points as ten sets of random number combinations is not included in the metal-based particle image, or when two or more coordinate points are included in the same metal-based particle image, this random number combination is discarded, and random number generation is repeated until all the ten coordinate points are respectively included in different metal-based particle images.

From the viewpoint of exciting highly effective plasmon, the metal-based particle 20 preferably has a smooth curved surface, more preferably has a flat shape having a smooth curved surface, in particular. However, the metal-based particle 20 may have some minute irregularities (roughness) on the surface, and in this context, the metal-based particle may have an irregular shape.

The number of the metal-based particles 20 contained in the metal-based particle assembly layer 21 is generally ten or more, and preferably 30 or more. By forming the metal-based particle assembly layer containing ten or more metal-based particles, strong plasmon resonance and extension of the range of effect of plasmon resonance are easily exhibited by interaction between localized plasmons of the metal-based particles. The number of the metal-based particles 20 contained in the metal-based particle assembly layer 21 may be, for example, 50 or more, further 1000 or more, still further 10000 or more. The number density of the metal-based particles 20 in the metal-based particle assembly layer 21 is preferably 7 particles/µm² or more, more preferably 15 particles/µm² or more.

Preferably, the metal-based particle assembly layer 21 does not exhibit conductivity as the layer. More preferably, each of the metal-based particles 20 constituting the metal-based particle assembly layer 21 is non-conductive with the adjacent metal-based particles. When the metal-based particle assembly layer 21 has a portion where the metal-based particles 20 can give and receive electrons to and from each other, the plasmon resonance effect tends to be reduced. Therefore, the metal-based particles 20 are preferably surely spaced apart from each other, and a conductive substance is preferably not interposed between the metal-based particles 20. The metal-based particle 20 itself may have conductivity.

The feature of the metal-based particle assembly layer 21 not exhibiting conductivity as a layer can be confirmed by, for example, the following method. Specifically, a pair of tester probes of a multimeter [tester ("E2378A" manufactured by Hewlett-Packard Company)] is brought into contact with the metal-based particle assembly layer 21 while the testers are spaced at a distance of 10 mm to 15 mm. If the multimeter displays "Overload" as a result of the resistance value being 30 MΩ or more in the range setting of "30 MΩ" under these measurement conditions, the metal-based particle assembly layer 21 does not exhibit conductivity as a layer.

### (3) Protective layer

The protective layer 30 covers the surface of each of the metal-based particles 20. The protective layer 30 is preferably in direct contact with the surface of the metal-based particles 20. The protective layer 30 may have a single layer structure or a multilayer structure. Typically, a part of the surface of each metal-based particles 20 (lower surface side in Fig. 1) is covered with the substrate 10, and thus the protective layer 30 can cover at least a part of the exposed portion, not covered with the substrate 10, of the surface of the metal-based particles 20, and it is preferable to cover the entire exposed portion, not covered with the substrate 10, of the surface of the metal-based particles 20. The metal-based particles 20 are preferably not covered with either the substrate 10 or the protective layer 30 and do not have a surface exposed to the outside.

The surface shape of the protective layer 30 conforms to the surface shape of the metal-based particles 20. The surface shape of the protective layer 30 conforming to the surface shape of the metal-based particles 20 means that the surface shape of the protective layer 30 is substantially parallel to the surface shape of the metal-based particles 20 in the cross-sectional view shown in Fig. 1. Fig. 1 is a schematic view of a cross section perpendicular to the main surface 10a of the substrate 10.

More specifically, in the surface shape of the protective layer 30, it is preferable that the thickness T of the protective layer 30 measured in a direction perpendicular to the main surface 10a, that is, the distance perpendicular to the main surface 10a between the interface 20a between the protective layer 30 and the metal-based particles and the surface 30a of the protective layer 30 on the side opposite to the substrate 10 is substantially uniform. The thickness T of the protective layer being substantially uniform means that the coefficient of variation (CV value) of the thickness of the protective layer, that is, (standard deviation of thickness T of protective layer/average value of thickness T of protective layer) is 30% or less.

The standard deviation and the average value of the thickness T can be determined as follows. Specifically, a microscope image such as a scanning microscope of a cross section perpendicular to the main surface 10a of the layered substrate is prepared. In the microscopic image, the magnification is set such that 10 to 250 pieces of metal-based particles are included. In the microscopic image, the length of the straight line of the main surface 10a is divided into 51 equal parts, and a set of coordinates 1, 2, ..., 50 is obtained from the left end of the cross-sectional image. From these points as starting points, a group of straight lines perpendicular to the main surface 10a is drawn to obtain intersections (intersections 1-1 to 50-1) between the straight lines and the interfaces between the metal-based particles 20 and the protective layer 30, and intersections (intersections 1-2 to 50-2) between the straight lines and the surface 30a of the protective layer 30 on the side opposite to the substrate 10 are obtained. A distance between the intersection 1-1 and the intersection 1-2 is defined as a protective layer thickness T1, a distance between the intersection 2-1 and the intersection 2-2 is defined as a protective layer thickness T2, and protective layer thickness T1 to T50 are obtained. The average value of these 50 values is taken as the average thickness of the protective layer. In addition, the standard deviation of these 50 values is defined as the standard deviation of the thickness of the protective layer, and (standard deviation of the thickness of the protective layer/average thickness of the protective layer) is defined as the coefficient of variation (CV value) of the thickness of the protective layer.

Note that when the straight line does not intersect with the metal-based particles in the microscopic image, the thickness of the straight line is not measured.

From the viewpoint of increasing the uniformity of the thickness of the protective layer to increase the light emission enhancement ratio, the coefficient of variation (CV value) of the thickness of the protective layer may be 20% or less, preferably 18% or less, and more preferably 15% or less.

The average thickness of the protective layer is not particularly limited, and may be, for example, 3 nm or more, 10 nm or more, 15 nm or more, 20 nm or more, 30 nm or more, or 40 nm or more. The thickness of the protective layer may be, for example, 300 nm or less, 250 nm or less, 200 nm or less, 150 nm or less, 100 nm or less, 80 nm or less, or less than 50 nm.

The surface roughness of the protective layer is not particularly limited, but the arithmetic average roughness Ra of the surface of the protective layer may be 10 nm or more, 15 nm or more, or 20 nm or more. The arithmetic average roughness Ra may be 500 nm or less, 300 nm or less, 200 nm or less, or 100 nm or less.

As shown in Fig. 1, the protective layer 30 may have a portion that is in contact with and covers a portion of the main surface 10a of the substrate 10 that is not covered with the metal-based particles 20.

The material of the protective layer is preferably a non-conductive material, that is, an insulating material. Examples of the insulating material include inorganic insulating materials such as SiO₂, SiN, TiO₂, Al₂O₃, and Si₃N₄; and organic insulating materials such as resin materials (for example, polystyrene, acrylic resin, epoxy resin, and the like). The protective layer may be composed of two or more types of materials. The protective layer may have a single-layer structure or a multilayer structure.

The protective layer is preferably amorphous. Whether the protective layer 30 is amorphous can be confirmed by HAADF-STEM and an electron diffraction pattern. For the protective layer 30, when an electron diffraction pattern of a portion corresponding to the protective layer in the cross-sectional STEM image is obtained, it can be determined that the protective layer 30 is an amorphous layer based on the absence of periodic contrast derived from crystals.

The water contact angle of the surface of the protective layer is not particularly limited, but may be 40° or less, preferably 30° or less, and more preferably 20° or less. Reducing the water contact angle of the surface of the protective layer makes it easy to bring the aqueous solution into contact with the protective layer. The aqueous solution may be, for example, a treatment liquid including a capture substance or a precursor thereof used for immobilizing the capture substance on the surface of the protective layer, or may be a sample that may include a substance to be detected to be supplied to the surface of the protective layer on which the capture substance is immobilized.

Formation of the protective layer is advantageous in the following points.
[A] In a case where the metal-based particles are used as a light-emitting enhancing element for enhancing the intensity of light emission from the light-emitting substance labeling the substance to be detected, the light-emitting substance is in direct contact with the metal-based particles, which may induce quenching caused by electron tunneling from the light-emitting material to the metal-based particles, and the enhancing effect may be reduced. Providing the protective layer on the metal-based particles allows the light-emitting substance and the metal-based particles to be reliably separated from each other, and thus quenching can be suppressed.
[B] The stability (oxidation resistance and the like) and environmental resistance stability (for example, light resistance, moisture resistance, and heat resistance) of the metal-based particles can be enhanced.

The layered substrate may further have another layer on the protective layer.

### (Effects and advantages)

The layered substrate according to the present embodiment can exhibit the following features [a] and [b]. These characteristics are considered to be exhibited by an interaction between localized plasmons of the plurality of metal-based particles 20.
[a] The range of effect of plasmon resonance exhibited by the metal-based particle assembly layer 21 is broad. As a result, for example, the applicable range of the emission enhancing effect by plasmon can be broadened. Thus, light emission of a light-emitting substance within a range of, for example, several hundred nanometers (e.g., 200 nm) from the surface of the metal-based particle assembly layer 21 can also be enhanced.
[b] The metal-based particle assembly layer 21 exhibits strong plasmon resonance. As a result, for example, a strong emission enhancing effect can be obtained.

With regard to [a], the layered substrate according to the present invention can enhance the light emission of the light-emitting substance disposed at a position apart from the metal-based particle assembly layer 21 by, for example, 10 nm or more, further several tens nanometers (e.g., 20 nm, 30 nm, or 40 nm) or more, still further 100 nm or more, or 200 nm or more.

With regard to [b], the intensity of plasmon resonance exhibited by the layered substrate is not merely the sum of localized plasmon resonances of the individual metal-based particles at a specific wavelength, but is more than that. In the layered substrate, individual metal-based particles interact with each other, and strong plasmon resonance is exhibited. Such strong plasmon resonance is considered to be exhibited by an interaction between localized plasmons of the metal-based particles.

In general, when an absorption spectrum of a plasmonic structure is measured by absorptiometry, a plasmon resonance peak (hereinafter, also referred to as a "plasmon peak") is observed as a peak on the longest wavelength side in ultraviolet to visible light region. The intensity of the plasmon resonance of a plasmonic structure can be evaluated from the magnitude of the absorbance at the maximum wavelength of the plasmon peak. As the value of absorbance increases, the intensity of plasmon resonance also tends to increase. In the metal-based particle assembly layer 21 having the predetermined structure, the absorbance at the maximum wavelength of the plasmon peak on the longest wavelength side in the ultraviolet to visible light region can be 1 or more, further 1.5 or more, still further about 2 when the absorption spectrum is measured by the following absorptiometry.

The absorption spectrum of the plasmonic structure can be measured by absorptiometry. Specifically, the absorption spectrum is obtained by using an integrating sphere spectrophotometer and measuring the following two values of intensity. The first one is intensity I of omnidirectionally transmitted light transmitted toward the metal-based particle assembly layer side when the back surface side of a substrate on which the metal-based particle assembly layer is layered (side opposite to the metal-based particle assembly layer) is irradiated with incident light in an ultraviolet to visible light region from a direction perpendicular to a substrate surface. The second one is intensity I₀ of omnidirectionally transmitted light transmitted from the opposite side of an incident surface when the surface of a substrate that has the same thickness and the same material as the substrate of the measurement sample and on which the metal-based particle assembly layer is not layered is irradiated with the same incident light from a direction perpendicular to the surface of the substrate. At this time, the absorbance, which is the vertical axis of the absorption spectrum, is represented by the following equation:$Absorbance = - {log}_{10} \left({I / I}_{0}\right) .$

The absorption spectrum can be measured using a general spectrophotometer.

In measuring the maximum wavelength of the plasmon peak on the longest wavelength side in the ultraviolet to visible light region and the absorbance thereof, absorption spectrum measurement may be performed by narrowing the measurement visual field using an objective lens and a spectrophotometer.

The layered substrate according to the present embodiment can increase the light emission enhancement ratio. Although the reason for this is not clear, for example, the following reasons are conceivable.

The long-range plasmon is considered to be largely caused by the fact that Whispering Gallery Mode propagating on the surface of each metal-based particle resonates with that of the adjacent particle. It is presumed that in Whispering Gallery Mode that travels along the surface of the metal-based particle, when the surface shape of the protective layer conforms to the surface shape of the metal-based particle, in other words, when the thickness of the protective layer covering the metal-based particle is uniform, the disturbance in the particle surface propagation and the inter-particle propagation is smaller than that when covered with the protective layer having a non-uniform thickness, and resonance between adjacent particles that causes long-distance plasmon is likely to occur.

### (Method for manufacturing layered substrate)

The layered substrate can be fabricated, for example, by the following method.

First, a plate-shaped substrate 10 is prepared. The surface of the substrate can be degreased and cleaned previously. As the degreasing and cleaning of the substrate, an appropriate method can be adopted depending on the material of the substrate, and examples thereof include cleaning using a liquid selected from organic solvents and water. Examples of the cleaning method include a method of immersing the base member in the liquid, a method of ultrasonically cleaning the base member while immersing the base member in the liquid, and a method of wiping the base member with a cloth (such as woven cloth and non-woven cloth) impregnated with the liquid. Degreasing and cleaning may be a combination of cleaning steps using two or more liquids. For example, when the substrate is a glass substrate, degreasing and cleaning can include ultrasonic cleaning using alcohols (such as methyl alcohol, ethyl alcohol, and isopropyl alcohol), ultrasonic cleaning using ketones (such as acetone, methyl ethyl ketone, methyl isobutyl ketone), and ultrasonic cleaning using ultrapure water, which are performed in this order.

Then, a metal-based fine particle layer is formed on the main surface of the substrate. Examples of this method are the following [A] to [C].
[A] A bottom-up method of growing a plurality of metal-based particles 20 from minute seeds on the substrate 10;
[B] a method for covering a plurality of metal-based particles 20 with a protective film including an amphiphilic material having a predetermined thickness, and then transferring covered particles onto the substrate 10 to form a film by the Langmuir Blodgett (LB) film method; and
[C] other methods including a method of postprocessing a thin film produced by vapor deposition or sputtering, resist processing, etching processing, and a casting method using a dispersion liquid in which metal-based particles are dispersed.

The method [A] preferably includes a step of growing metal-based particles at a significantly low speed on the substrate 10 adjusted to a predetermined temperature (hereinafter, this step is also referred to as a "particle growth step"). According to the manufacturing method including the particle growth step, the metal-based particle assembly layer 21 having the above-described preferable average particle diameter, average height, aspect ratio, average inter-particle distance, and standard deviation of the average inter-particle distance can be obtained in a well controlled manner.

In the particle growth step, the speed at which the metal-based particles are grown on the substrate 10 is preferably less than 1 nm/min, and more preferably 0.5 nm/min or less in terms of average height growth rate. The average height growth rate as used herein can also be referred to as an average deposition rate or an average thickness growth rate of the metal-based particles, and can be defined by the following expression:
average height of metal-based particles/metal-based particle growth time. The definition of the "average height of metal-based particles" is as described above.

The metal-based particle growth time refers to a time from the start to the end of the growth of the metal-based particles, and specifically refers to a supply time of the metal-based material. When the metal-based particle assembly layer 21 is regarded as a film, the metal-based particle growth time can also be referred to as a film formation time. When the method of growing the metal-based particles is the sputtering method, the metal-based particle growth time means a sputtering time.

The temperature of the substrate 10 in the particle growth step is preferably 100°C or more and 450°C or less, more preferably 200°C or more and 450°C or less, still more preferably 250°C or more and 350°C or less, yet more preferably 300°C or the vicinity thereof (about 300°C ± 10°C).

Adjustment of factors such as the average height growth rate, the substrate temperature, and/or the metal-based particle growth time makes it possible to control the average inter-particle distance and the standard deviation thereof, the average particle diameter, the average height, and the aspect ratio of the plurality of metal-based particles 20 grown on the substrate 10.

The pressure when the metal-based particles are grown (pressure in the apparatus chamber) is not particularly limited as long as the pressure can grow particles, but is generally less than atmospheric pressure. The lower limit of the pressure is not particularly limited, but is preferably 0.5 Pa or more, more preferably 6 Pa or more, and still more preferably 10 Pa or more because the average height growth rate can be easily adjusted within the above range.

A specific method of growing the metal-based particles on the substrate 10 is not particularly limited as long as the method can grow particles at an average height growth rate of less than 1 nm/min. Examples of the method include a sputtering method and a vapor deposition method such as vacuum vapor deposition. Among the sputtering methods, a direct current (DC) sputtering method is preferably used because the metal-based particle assembly layer can be grown relatively easily, and an average height growth rate of less than 1 nm/min is easily maintained.

The sputtering method is not particularly limited, and a direct current argon ion sputtering method can be used. In this method, argon ions generated by an ion gun or plasma discharge are accelerated by an electric field, and a target is irradiated with the argon ions. Other conditions such as a current value, a voltage value, and a distance between the substrate and the target in the sputtering method are appropriately adjusted so that the particles are grown at an average height growth rate of less than 1 nm/min.

In order to obtain the metal-based particle assembly layer 21 having the above-described preferable average particle diameter, average height, aspect ratio, average inter-particle distance, and standard deviation of the average inter-particle distance in a well controlled manner, the average particle diameter growth rate is preferably set to less than 5 nm in addition to setting the average height growth rate to less than 1 nm/min in the particle growth step. However, when the average height growth rate is less than 1 nm/min, the average particle diameter growth rate is generally less than 5 nm. The average particle diameter growth rate is more preferably 1 nm/min or less. The average particle diameter growth rate is defined as the following expression:
average particle diameter of metal-based particles/metal-based particle growth time. The definitions of "average particle diameter of metal-based particles" and "metal-based particle growth time" are as described above.

In order to obtain the metal-based particle assembly layer 21 having the above-described preferable average particle diameter, average height, aspect ratio, average inter-particle distance, and standard deviation of the average inter-particle distance, it is preferable to appropriately adjust the metal-based particle growth time in the particle growth step while considering the above-described preferable manufacturing conditions.

### (Formation of protective layer)

Then, a protective layer is formed on the surface of the metal-based particles.

The method for forming the protective layer is not particularly limited, but a dry film forming method such as a vapor deposition method, a sputtering method, an ion plating method, a CVD method, and an ALD method, and a wet film forming method such as spray coating are suitable from the viewpoint of forming a surface shape conforming to the surface shape of the metal-based particles.

The sputtering method is not particularly limited, but it is preferable to use a radio frequency (RF) sputtering method. As the gas, argon gas or the like can be used. From the viewpoint of reducing the contact angle of water on the surface of the protective layer, it is preferable to form a SiO₂ film on at least the outermost surface of the protective layer by a sputtering method.

From the viewpoint of forming a surface shape conforming to the surface shape of the metal-based particles, it is preferable to increase the energy of the composition (sputtered particles) ejected from the target by increasing the output in the RF sputtering, and for example, the discharge output (power) is 200 W or more, preferably 500 W or more, and more preferably 1000 W or more. Increasing the energy of the sputtered particles allows the film to be densified while enhancing the conformability to the underlayer structure, and the film can be formed at high speed.

RF sputtering is preferably performed under an inert gas atmosphere such as argon gas, and it is preferable that oxygen is not added to the inert gas atmosphere.

### <Sensor element>

The layered substrate can be used for a sensor element mounted on a sensor apparatus for detecting an analyte. For example, after the layered substrate is cleaned with a piranha solution or the like, a capturing substance that specifically binds to an analyte is introduced into a predetermined position on the surface of the protective layer 30 (surface opposite to the substrate 10 side) by using a photolithography method or the like. As a result, the sensor element can be obtained.

The sensor element can detect an analyte, for example, as follows. The detection may be qualitative or quantitative detection, and refers to, for example, identification or quantification of an analyte. When the labeled analyte specifically bound to the capturing substance included in the sensor element is irradiated with excitation light, the label as a light-emitting substance is excited. Then, the metal-based particle assembly layer of the sensor element, which is preferably a plasmonic structure, resonates with the excited light-emitting substance, and plasmon luminescence enhancement is exhibited. The analyte can be qualitatively or quantitatively detected by using a detector and detecting emission from the excited light-emitting substance. For example, the abundance of the analyte can be qualitatively or quantitatively measured by measuring the luminescence intensity.

With the sensor element including the layered substrate according to the present invention, detection sensitivity and detection accuracy can be improved because the layered substrate includes a metal-based particle assembly layer which is preferably a plasmonic structure, and thus plasmon emission enhancement can be exhibited.

The analyte is a substance to be qualitatively or quantitatively detected, and is a substance that specifically binds to the capturing substance. The analyte is not particularly limited, and examples thereof include nucleosides, nucleotides, nucleic acids, proteins, saccharides, glycoproteins, lectins, viruses, cells, antibodies, and exosomes. A sensor element capable of detecting a substance derived from or relating to a living body is also referred to as a biosensor element.

The nucleic acid means a polymer of a phosphate of a nucleoside in which a purine base or a pyrimidine base and a sugar are glycosidically linked (nucleotide chain). The nucleic acid includes an oligonucleotide including a probe DNA, a polynucleotide, DNA obtained by polymerizing a purine nucleotide and a pyrimidine nucleotide (full length or a fragment thereof), RNA, and a polyamide nucleotide derivative (PNA). In addition, nucleoside is a compound in which a base and a sugar are glycosidically linked, nucleotide is a compound in which phosphoric acid is linked to nucleoside, and nucleoside and nucleotide are compounds containing a base.

The term "specifically binding" broadly means chemical bonding including non-covalent bonding, covalent bonding, and hydrogen bonding between substances, and examples thereof include an interaction between protein molecules and an electrostatic interaction between molecules.

The captured analyte can be detected by labeling in advance the analyte with a label as a light-emitting substance and detecting light emission from the label. The label may be a labeling substance that specifically binds to a complex obtained by specific binding between the capturing substance and the analyte. The light-emitting substance is a substance that emits light by injecting excitation energy generated by excitation light. The principle of light emission of the light-emitting substance is not limited, and examples thereof include fluorescence, phosphorescence, and chemiluminescence. The light-emitting substance known in the related art can be used.

The capturing substance is a substance that specifically binds to an analyte and functions to capture the analyte. The capturing substance is, for example, fixed to the surface of the protective layer 30. The capturing substance is, for example, a substance having a binding active group that specifically binds to an analyte. Examples of the binding active group include a carboxyl group and a hydroxyl group that can electrostatically interact with an analyte. The capturing substance is not particularly limited, and examples thereof include nucleosides, nucleotides, nucleic acids, proteins, saccharides, and glycoproteins.

Examples of the sensor apparatus include biosensor apparatuses such as a DNA sequencer, a DNA microarray, a virus sensor, an ion sensor, a plate reader (such as protein chip, glycochip, lectin chip), a microspectrometer, and a glucose sensor.

### EXAMPLES

Hereinafter, the present invention will be described in more detail with reference to examples, but the present invention is not limited to these examples.

### <Example 1>

### (1) Degreasing and cleaning of glass substrate

A soda glass substrate having a 50 mm-side square shape and a thickness of 0.7 mm was prepared. This soda glass substrate was subjected to cleaning with isopropyl alcohol, cleaning with acetone, and then washing with ultrapure water as degreasing and cleaning treatment.

### (2) Formation of metal-based particle assembly layer

The silver particles exhibited extremely slow growth on the soda glass substrate subjected to a degreasing and cleaning treatment using a direct current magnetron sputtering apparatus under the following conditions, and thus a metal-based particle assembly layer was formed on the entire surface of the substrate.
Gas used: argon
In-chamber pressure (sputtering gas pressure): 10 Pa
Distance between substrate and target: 100 mm
Sputtering power: 4W
Average particle diameter growth rate (average particle diameter/metal-based particle growth time): 0.9 nm/min
Average height growth rate (= average deposition rate = average height/metal-based particle growth time): 0.25 nm/min
Substrate temperature: 300°C
Metal-based particle growth time: 360 min

From the SEM images, the average particle diameter, the average inter-particle distance, and the standard deviation of the average inter-particle distance, all of which were based on the above-described definitions, of the silver particles constituting the metal-based particle assembly layer were determined to be 335 nm, 16.7 nm, and 27.8 nm, respectively. As can be seen from the SEM images, the metal-based particle assembly layer includes about 6.25 × 10¹⁰ (about 25 particles/µm²) of silver particles. In addition, the average height of the silver particles was determined to be 96.2 nm on the basis of the result of AFM image photographing using "VN-8010" manufactured by KEYENCE CORPORATION. Therefore, the aspect ratio (average particle diameter/average height) of the silver particles was calculated to be 3.48.

Conductivity was checked by connecting a tester [multimeter ("E2378A" manufactured by Hewlett-Packard Company)] to the surface of the metal-based particle assembly layer formed on the substrate. As a result, nonconductivity was confirmed.

### (3) Formation of protective layer

On the surface of the substrate on which the plurality of metal-based particles were formed, a SiO₂ layer as a protective layer was formed by an RF sputtering method using a SiO₂ target under the conditions of an argon atmosphere without introducing oxygen, a discharge output (power) of 1000 W, and a growth rate of the protective layer of 1.8 nm/min.

A substrate considerably larger than the target is rotated on the target to form a protective layer in a wide range on the substrate, and the growth rate of the protective layer is an average rate in the entire area of the deposited protective layer.

### (4) Evaluation of protective layer

### (4-1) Covering state of metal-based particle assembly layer with protective layer and average thickness of protective layer

The layered substrate was cut along a plane parallel to the layering direction of layers, and a sectional image of the cut portion was observed using the scanning electron microscope "JSM-5500" manufactured by JEOL Ltd. In this manner, it was confirmed that the protective layer covered the entire surface of the metal-based particles on the side opposite to the substrate. In addition, the surface of the layered substrate on the side opposite to the glass substrate was measured by X-ray photoelectron spectroscopy by using the apparatus and under measurement conditions described below, and no signal of silver atoms was detected. This also contributed to confirmation that the protective layer covered the entire surface of the metal-based particles on the side opposite to the glass substrate. In addition, it was confirmed that the protective layer was formed not only on the surface of the metal-based particles but also on the surface of the substrate exposed between the metal-based particles.

### (4-2) Standard deviation and average value of thickness T of protective layer

In addition, the standard deviation and the average value of the thickness T of the protective layer based on the above measurement method using a scanning electron microscope "JSM-5500" manufactured by JEOL Ltd. were 4.0 nm and 28.0 nm, respectively. The coefficient of variation (CV value) of the thickness of the protective layer, that is, (standard deviation of thickness of protective layer/average value of thickness of protective layer) was 14.3%.

### (4-3) Arithmetic average roughness Ra of surface of protective layer

The arithmetic average roughness Ra of the surface of the protective layer of the layered substrate was measured by AFM. Specifically, using an AFM (VN-8000 manufactured by KEYENCE CORPORATION), an irregularity shape of 5 µm × 5 µm was acquired in a contact mode for the surface on the protective layer side of the layered substrate, then the entire region of the effective area was designated, and the value of the arithmetic average roughness Ra of the surface of the protective layer was output from "three-dimensional measurement" analysis. The arithmetic average roughness Ra of the surface of the protective layer of Example 1 was 20.1 nm.

### (4-4) Water contact angle of surface of protective layer

The contact angle of ultrapure water on the surface of the protective layer of the layered substrate was obtained using a fully automatic contact angle meter DM-701 (manufactured by Kyowa Interface Science Co., Ltd.). The water contact angle of the surface of the protective layer of Example 1 was 15.6°.

### (4-5) Crystalline state of protective layer

Crystallinity of the cross section of the protective layer was confirmed by electron diffraction pattern analysis of STEM in accordance with the following measurement conditions using the following apparatus. There was no diffraction contrast derived from the crystal structure, and thus it was confirmed that the protective layer was amorphous.

### (Apparatus and measurement conditions)

· Apparatus: ARM200F manufactured by JEOL Ltd.
· Measurement method: electron diffraction pattern observation
· Acceleration voltage: 200 kV

### (4-6) Evaluation of light emission enhancement ratio of layered substrate

### <Example A>

Growing silver particles under the same conditions as in Example 1 caused the same metal-based particle assembly layer as in Example 1 to be formed on a soda glass substrate having a thickness of 0.5 mm. This metal-based particle assembly layer had the same particle shape and average inter-particle distance as in Example 1.

Immediately thereafter, a SiO₂ protective layer having an average thickness of 28.0 nm was formed under the same conditions as in Example 1. The surface of the protective layer was spin-coated with the rhodamine B solution at a rotation speed of 2000 rpm, and then dried to fix the rhodamine B dye as a light-emitting substance to the surface of the protective layer, thereby obtaining a photo-excited light emitting element A. The rhodamine B solution was prepared by dissolving a rhodamine B dye (Rhodamine 110, manufactured by Exciton, Inc.) in ethanol so as to have a concentration of 0.15 mM. The standard deviation and the average value of the thickness T of the protective layer were 4.0 nm and 28.0 nm, respectively. The surface shape of the SiO₂ protective layer conformed to the surface shape of the metal-based particles. The coefficient of variation (CV value) of the thickness of the protective layer, that is, (standard deviation of thickness of protective layer/average value of thickness of protective layer) was 14.3%.

### <Reference example A'>

A reference photo-excited light emitting element A' was obtained in the same manner as in Example A except that the metal-based particle assembly layer was not provided.

### <Comparative Example B>

A comparative photo-excited light emitting element B on which a rhodamine dye was immobilized was fabricated in the same manner as in Example A except that the protective layer was fabricated by a spin coating method with an SOG solution. Specifically, the SOG solution was spin-coated on the metal-based particle assembly layer to form a SiO₂ protective layer having an average thickness of 35.3 nm. As the SOG solution, a composition obtained by diluting "OCD T-7 5500T" manufactured by TOKYO OHKA KOGYO CO., LTD. as an organic SOG material with ethanol was used. The surface shape of the SiO₂ protective layer did not conform to the surface shape of the metal-based particles and was smooth as a whole. The standard deviation, average value, and coefficient of variation of the thickness T of the protective layer were 16.1 nm, 35.3 nm, and 45.7%, respectively. The arithmetic average roughness Ra of the surface of the protective layer was 5.2 nm, and the water contact angle (before the fixation of the rhodamine dye) of the surface of the protective layer was 64.1°.

### <Comparative Reference Example B'>

A comparative photo-excited light emitting element B' was obtained in the same manner as in Comparative Example B except that the metal-based particle assembly layer was not provided.

Then, the optical sensing device illustrated in Fig. 1 was constructed. A fluorescence spectrophotometer (trade name: PMA-12, manufactured by Hamamatsu Photonics K.K.) was used as the detector D.

In the optical sensing device illustrated in Fig. 1, the layered substrate 100 was irradiated with excitation light L1 having a wavelength of 532 nm using a light source. The emitted light L2 was subjected to measurement by a detector D through a wavelength-cut filter F that blocks light at the wavelength of the excitation light L1.

For the emission spectrum obtained by the detector D, an integral value of the emission spectrum over a wavelength of 550 nm to 950 nm was calculated.

### (Evaluation of emission enhancing effect)

When the integral value of the emission spectrum in Reference Example A' was 1, the integral value of the emission spectrum in Example A was calculated to obtain the light emission enhancement ratio of Example A. In addition, when the integral value of the emission spectrum in Comparative Reference Example B' was 1, the integral value of the emission spectrum in Comparative Example B was calculated to obtain the light emission enhancement ratio of Comparative Example B. The light emission enhancement ratios described above were 51.1-fold and 17.1-fold, respectively.

### DESCRIPTION OF REFERENCE SIGNS

- 10: Substrate
- 20: Metal-based particles
- 21: Metal-based particle assembly layer
- 30: Protective layer
- 100: Layered substrate

## Claims

1. A layered substrate, comprising:
a plate-shaped substrate having a pair of main surfaces opposite to each other;
a plurality of metal-based particles disposed on one main surface of the substrate so as to be separated from each other in a direction parallel to the one main surface; and
a protective layer covering a surface of each of the metal-based particles, wherein
the plurality of metal-based particles satisfy at least one of the following (1) and (2), and
a surface shape of the protective layer conforms to surface shapes of the metal-based particles,
(1) an average particle diameter of the plurality of metal-based particles is 200 to 1600 nm, an average height of the plurality of metal-based particles is 55 to 500 nm, and an aspect ratio defined by a ratio of the average particle diameter to the average height is 1 to 8, and
(2) each of the plurality of metal-based particles is disposed on the one main surface of the substrate such that an average distance between the plurality of metal-based particles and adjacent metal-based particles is 1 to 1000 nm, and a standard deviation of the average distance is 30 nm or less.

2. The layered substrate according to claim 1,
wherein a coefficient of variation (CV value) of a thickness of the protective layer is 30% or less.

3. The layered substrate according to claim 1 or 2, wherein an average value of a thickness of the protective layer is 300 nm or less.

4. The layered substrate according to claim 3,
wherein an average value of a thickness of the protective layer is less than 50 nm.

5. The layered substrate according to claim 1 or 2, wherein the protective layer is amorphous.
